# EUROPÄISCHE PATENTANMELDUNG

(11) **EP 1 669 631 A1**
(43) Veröffentlichungstag der Anmeldung: **14.06.2006**
(21) Anmeldenummer: 05026600.6
(22) Anmeldetag: 06.12.2005
(51) Int. Cl.: F16F 9/32, F16F 9/46

(54) **Bewegungsdämpfer**

(30) Priorität: 10.12.2004 DE 102004059653
(71) Anmelder: Liebherr-Aerospace Lindenberg GmbH, 88161 Lindenberg/Allgäu (DE)
(72) Erfinder: Gaile, Anton, Dipl.-Ing., 88299 Leutkirch (DE)
(74) Vertreter: Thoma, Michael

(57) **Zusammenfassung**

Die vorliegende Erfindung betrifft einen Bewegungsdämpfer für Fahrzeugfahrwerke, insbesondere Schienenfahrzeuge, mit einem Dämpfergehäuse, in dem ein Dämpferkolben beweglich aufgenommen ist. Erfindungsgemäß zeichnet sich der Bewegungsdämpfer dadurch aus, daß im Inneren des Dämpfergehäuses ein Sensor zur Erfassung der Bewegung und/oder Position des Dämpferkolbens relativ zu dem Dämpfergehäuse angeordnet ist.

## Beschreibung

Die vorliegende Erfindung betrifft einen Bewegungsdämpfer für Fahrzeugfahrwerke, insbesondere Schienenfahrzeuge, mit einem Dämpfergehäuse, in dem ein Dämpferkolben beweglich aufgenommen ist.

Ein solcher Dämpfer ist beispielsweise aus der DE 103 06 564 B3 bekannt und wird regelmäßig zur Stoß- und Bewegungsdämpfung in Fahrwerken von Schienenfahrzeugen verwendet, um Bewegungen des Fahrgestells gegenüber dem Fahrzeugchassis zu dämpfen. Bei solchen Fahrwerken ist es aus verschiedenen Gründen üblich, Bewegungen des Fahrgestells gegenüber dem Fahrzeugchassis zu erfassen, beispielsweise um aus den entsprechenden Längen- bzw. Höheninformationen eine Regelung des Fahrzeugniveaus durchführen zu können. Sie können jedoch ggf. auch zur aktiven Regelung des Bewegungsdämpfers oder zur Erfassung des Streckenverlaufs genutzt werden. Herkömmlicherweise werden hierzu Sensoren am Fahrgestell angebracht, die jedoch recht teuer und nichtsdestotrotz unzuverlässig sind.

Der Erfindung liegt daher die Aufgabe zugrunde, einen verbesserten Dämpfer der genannten Art zu schaffen, der Nachteile des Standes der Technik vermeidet und letzteren in vorteilhafter Weise weiterbildet. Vorzugsweise soll mit dem Bewegungsdämpfer die Erfassung der Bewegung bzw. Stellung des Fahrgestells gegenüber dem Fahrzeugchassis verbessert werden.

Erfindungsgemäß wird diese Aufgabe durch einen Bewegungsdämpfer gemäß Patentanspruch 1 gelöst. Bevorzugte Ausgestaltungen sind Gegenstand der Unteransprüche.

Erfindungsgemäß ist also in den Bewegungsdämpfer ein Sensor integriert, der die Bewegung und/oder die Position des Dämpferkolbens bzw. einer damit verbundenen Kolbenstange relativ zu dem Dämpfergehäuse erfaßt. Aus der Information über die Bewegung bzw. Position des Dämpferkolbens relativ zum Dämpfergehäuse kann die gewünschte Höhen- bzw. Längeninformation abgeleitet werden. Der Sensor ist im Inneren des Dämpfergehäuses aufgenommen und hierdurch mechanisch optimal gegenüber Umwelteinflüssen wie Eis, Schnee, Sand, Staub oder dergleichen sowie mechanische Beschädigungen geschützt. Die bislang bestehenden Zuverlässigkeitsprobleme können hierdurch beseitigt werden.

Durch das Integrieren des Weg- bzw. Positionssensors in den Dämpferinnenraum wird zudem kein zusätzlicher Einbauraum benötigt, sondern der an sich bereits vorhandene Bauraum ausgenutzt. Auf zusätzliche Befestigungspunkte kann verzichtet werden. Zudem eignet sich die Anordnung des Sensors im Bewegungsdämpfer optimal für eine Nachrüstung, da die Befestigungskonsolen für die Dämpfer bereits vorhanden sind.

Vor allem kann durch die Anordnung des Sensors im Dämpferinneren ein wesentlich einfacherer und damit preisgünstigerer Sensortyp verwendet werden. Die Kosten des Dämpfers mit integriertem Wegsensor sind vergleichbar einem Sensor mit ähnlicher mechanischer Ausführung ohne Dämpferfunktion. Nicht zu vernachlässigen ist zudem, daß durch die Integration des Sensors in den Bewegungsdämpfer eine bessere elektromagnetische Verträglichkeit erreicht wird.

Vorteilhafterweise sind der Sensor sowie der Bewegungsdämpfer nicht zu einer untrennbaren Einheit verbunden. Der Sensor kann separat ausbaubar in dem Dämpfergehäuse angeordnet sein. Hierdurch kann bei einem Defekt des Dämpfers der Sensor ausgebaut und wieder verwendet und umgekehrt bei einem Defekt des Sensors nur dieser ausgetauscht werden.

Der Sensor selbst kann verschieden ausgebildet sein. Er kann nach verschiedenen Wirkprinzipien arbeiten. So kann ein induktiver Sensor zur Wegerfassung ebenso vorgesehen sein wie ein kapazitiver Sensor. Der Sensor kann auch optoelektronisch oder akustisch, insbesondere mit Ultraschall arbeiten. Auch ein nach dem Potentiometerprinzip arbeitender Sensor kann Verwendung finden.

Nach einer vorteilhaften Ausführung der Erfindung besitzt der Sensor einen Weggeber sowie einen damit zusammenwirkenden Wegaufnehmer, von denen der eine am Dämpfergehäuse befestigt ist und der andere mit dem Dämpferkolben verbunden ist, so daß eine Bewegung des Dämpferkolbens relativ zum Dämpfergehäuse eine entsprechende Bewegung des Weggebers relativ zu dem Wegaufnehmer des Sensors erzeugt.

In an sich bekannter Weise kann das Dämpfergehäuse einen Zylinder bilden, in dem der mit einer Kolbenstange verbundene Dämpferkolben axial verschieblich sitzt. Nach einer vorteilhaften Ausführung der Erfindung kann der Wegaufnehmer des Sensors am stirnseitigen Boden des zylindrischen Dämpfergehäuses befestigt sein, während der Weggeber auf der diesem Boden zugewandten Stirnseite des Dämpferkolbens und/oder der damit verbundenen Kolbenstange sitzt. Es versteht sich, daß die Anordnung grundsätzlich auch umgekehrt sein kann, d.h. daß der Weggeber am stirnseitigen Boden des Zylinders sitzt, während der Wegaufnehmer kolben- bzw. kolbenstangenseitig angeordnet ist. Die zuvor beschriebene Anordnung bringt jedoch Vorteile mit sich, so z. B. in Bezug auf den erfaßbaren Hubweg sowie die Signalleitungen.

Um eine kleinbauende Sensoranordnung bei dennoch großen erfaßbaren Hubwegen zu schaffen, kann nach einer besonders vorteilhaften Ausführung der Erfindung die Kolbenstange eine Axialbohrung aufweisen und der Sensor einen am Dämpfergehäuse befestigten Aufnehmerstab besitzen, über den die Kolbenstange mit der Axialbohrung schiebbar ist, so daß der Aufnehmerstab in die Axialbohrung der Kolbenstange einfährt. Sitzt der mit dem Aufnehmerstab zusammenwirkende Weggeber an dem Kolben oder einem daraus hervortretenden Ende der Kolbenstange, können große Hubwege erfaßt werden, ohne den nutzbaren Bauraum des Zylinders zu beeinträchtigen.

Nach einer vorteilhaften Ausführung der Erfindung kann der Weggeber eine auf der Kolbenstange sitzende Geberhülse aufweisen, die von dem Aufnehmerstab durchdrungen wird: Es versteht sich jedoch, daß auch anders geformte Geberstücke vorgesehen werden können.

Das im Inneren des Bewegungsdämpfers erzeugte Sensorsignal, das die Stellung des Dämpferkolbens relativ zum Dämpfergehäuse wiedergibt, kann für verschiedene Zwecke verwendet und weiterverarbeitet werden. Insbesondere kann das Sensorsignal einer Höhenerfassung bei Niveauregelungssystemen und/oder bei pneumatischen oder hydropneumatischen Federungssystemen dienen. Alternativ oder zusätzlich kann das Sensorsignal zur aktiven Dämpferregelung herangezogen werden. Der Dämpfer kann hierbei einen Primärdämpfer, einen Sekundärdämpfer oder einen Querdämpfer bilden. Ebenso ist es möglich, durch den integrierten Sensor eine Wegerfassung bei Drehdämpfern, Koppel- oder Schlingerdämpfern zu verwirklichen und diese zur Erfassung des Schienenverlaufs und/oder zur Erfassung von Störgrößen, wie z. B. dem Aufschwingen des Systems, zu verwenden.

Die Erfindung wird nachfolgend anhand eines bevorzugten Ausführungsbeispiels und einer zugehörigen Zeichnung näher erläutert. In der Zeichnung zeigt:

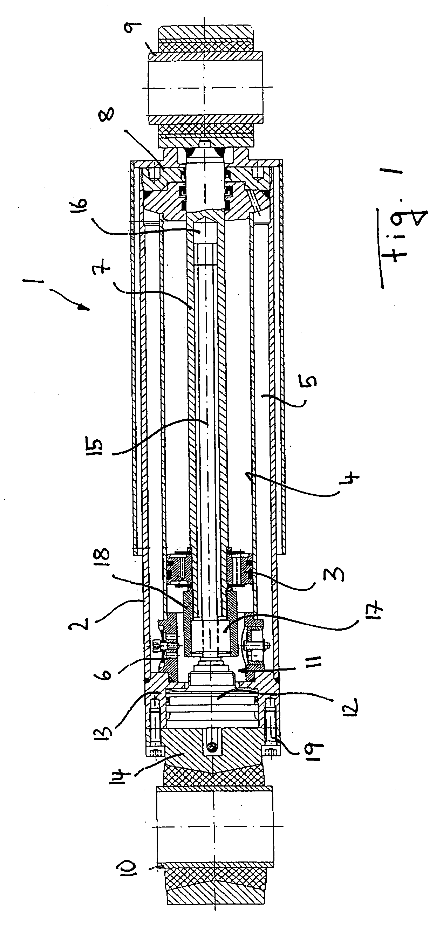

- Figur 1:: einen Längsschnitt durch einen Bewegungsdämpfer mit einem integrierten Wegsensor nach einer vorteilhaften Ausführung der Erfindung, der im Fahrwerk eines Schienenfahrzeugs, ggf. auch in einem Lastkraftfahrzeug, Verwendung finden kann.

Der in Figur 1 gezeigte Bewegungsdämpfer 1 ist als Zweirohrdämpfer ausgebildet. Das Dämpfergehäuse 2 bildet einen Zylinder 4 sowie einen den Zylinder 4 umgebenden Ringraum 5, der mit dem Innenraum des Zylinders 4 über ein Dämpfer- bzw. Drosselventil 6 in Strömungsverbindung bringbar ist.

In dem Zylinder 4 des Dämpfergehäuses 2 sitzt ein Dämpferkolben 3 axial verschieblich, der den Innenraum des Zylinders 4 in zwei Zylinderkammern unterteilt. Wie Figur 1 zeigt, sind in dem Dämpferkolben 3 in an sich bekannter Weise Drosselkanäle ausgebildet bzw. entsprechende Ventile vorgesehen. Der Dämpferkolben 3 sitzt auf einer Kolbenstange 7, die einenends aus dem Zylinder 4 und dem Dämpfergehäuse 2 austritt und in dem das Dämpfergehäuse 2 abschließenden Ringbodenabschnitt 8 längs verschieblich geführt ist. Das aus dem Dämpfergehäuse 2 austretende Ende der Kolbenstange 7 ist mit einer buchsenförmigen Dämpferlagerung 9 versehen ebenso wie die gegenüberliegende Stirnseite des Dämpfergehäuses 2 mit einer solchen buchsenförmigen Dämpferlagerung 10 versehen ist.

Der im Innenraum des Zylinders 4 angeordnete Wegerfassungssensor 11 umfaßt einen Sensorkopf 12, der in dem Boden 13 des Dämpfergehäuses 2 aufgenommen ist. Wie Figur 1 zeigt, umfaßt der Boden 13 des Dämpfergehäuses 2 eine zentrische Ausnehmung, die axial von einem Bodendeckel 14, an dem die Dämpferlagerung 10 befestigt ist, lösbar verschließbar ist. Werden die Schrauben 19 gelöst, kann der Bodendeckel 14 abgenommen und der Sensorkopf 12 entfernt werden.

An dem Sensorkopf 12 ist ein Aufnehmerstab 15 befestigt, der sich koaxial zu der Kolbenstange 7 erstreckt und in dieser aufgenommen ist. In der Kolbenstange 7 ist hierzu eine Axialbohrung 16 vorgesehen, so daß der Aufnehmerstab 15 in die Kolbenstange 7 einfahrbar ist. Es versteht sich, daß die Axialbohrung 16 eine ausreichende Länge sowie einen ausreichenden Innendurchmesser besitzt, um auch in der völlig eingeschobenen Stellung der Kolbenstange 7 die Aufnahme des Aufnehmerstabes 15 zu gewährleisten.

Der Aufnehmerstab 15 wirkt mit einem Weggeber 17 zusammen, der in der gezeichneten Ausführungsform hülsenförmig ausgebildet ist und am Ende der Kolbenstange 7 an dieser befestigt ist. Die Kolbenstange 7 steht in der gezeichneten Ausführungsform über den Kolben 3 über. An dem überstehenden Kolbenstangenstummel ist eine Haltehülse 18 aufgeschraubt, in der der Weggeber 17 angeordnet ist. Auch der Weggeber 17 ist lösbar montiert, um ihn separat von dem Bewegungsdämpfer 1 austauschen zu können.

Wie Figur 1 zeigt, erstreckt sich der Aufnehmerstab 15 durch den hülsenförmigen Weggeber 17 hindurch. In jedem Fall ist die Anordnung so getroffen, daß der stabförmige Aufnehmer 15 die Position des Weggebers 17 relativ zu ihm erfassen kann.

Der Aufnehmerstab sowie der Weggeber 17 können grundsätzlich verschieden ausgebildet sein. In der gezeichneten Ausführung kann der Weggeber 17 beispielsweise eine Magnethülse sein, während der Aufnehmerstab 15 als Wicklungsstab ausgebildet ist, mit Hilfe dessen je nach Stellung des Weggebers 17 eine Magnetfeldänderung erfaßt werden kann.

Der Aufnehmerstab 15 kann jedoch auch in anderer Weise ausgebildet sein. Beispielsweise kann er in Form eines dünnen Drahtes einen Schallwellenempfänger/-sender bilden, so daß ausgesendete Schallwellen vom hülsenförmigen Weggeber 17 zurückgeworfen und dementsprechend dessen Position erfaßt werden kann. Auch kann der Aufnehmerstab 15 mit dem Weggeber 17 nach dem Wirkprinzip eines Potentiometers zusammenwirken.

Das von dem Aufnehmerstab 15 aufgenommene Signal kann in einer Auswertelogik in ein entsprechendes Sensorsignal umgewandelt werden, wobei die Auswertelogik in dem Sensorkopf 12 und/oder auch außerhalb des Bewegungsdämpfers 1 angeordnet sein kann. Der Sensorkopf 12 steht über ein nicht näher dargestelltes Signalkabel mit der gewünschten Signalverarbeitungseinrichtung in Verbindung.

## Patentansprüche

1. Bewegungsdämpfer für Fahrzeugfahrwerke, insbesondere Schienenfahrzeuge, mit einem Dämpfergehäuse (2), in dem ein Dämpferkolben (3) beweglich aufgenommen ist, **dadurch gekennzeichnet, daß** im Inneren des Dämpfergehäuses (2) ein Sensor (11) zur Erfassung der Bewegung und/oder Position des Dämpferkolbens (3) relativ zu dem Dämpfergehäuse (2) angeordnet ist.

2. Bewegungsdämpfer nach dem vorhergehenden Anspruch, wobei der Sensor (11) separat ausbaubar in dem Dämpfergehäuse (2) aufgenommen ist.

3. Bewegungsdämpfer nach einem der vorhergehenden Ansprüche, wobei der Sensor (11) einen Weggeber (17) sowie einen Wegaufnehmer (15) aufweist, von denen der eine am Dämpfergehäuse (2) befestigt und der andere mit dem Dämpferkolben (3) verbunden ist, so daß eine Bewegung des Dämpferkolbens (3) relativ zu dem Dämpfergehäuse (2) eine entsprechende Bewegung des Weggebers (17) relativ zu dem Wegaufnehmer (15) erzeugt.

4. Bewegungsdämpfer nach dem vorhergehenden Anspruch, wobei das Dämpfergehäuse (2) einen Zylinder (4) bildet, in dem der mit einer Kolbenstange (7) verbundene Dämpferkolben (3) längs verschieblich ist und in dem der Sensor (11) aufgenommen ist.

5. Bewegungsdämpfer nach den beiden vorhergehenden Ansprüchen, wobei der Wegaufnehmer (15) an einem stirnseitigen Boden des Zylinders (4) befestigt ist und der Weggeber (17) auf der dem Boden zugewandten Stirnseite des Dämpferkolbens (3) und/oder der damit verbundenen Kolbenstange (7) sitzt.

6. Bewegungsdämpfer nach einem der vorhergehenden Ansprüche, wobei eine mit einer Axialbohrung (16) versehene Kolbenstange (7) vorgesehen ist und der Sensor (11) einen am Dämpfergehäuse (2) befestigten Aufnehmerstab (15) aufweist, der in die Axialbohrung (16) der Kolbenstange (7) einfahrbar ist.

7. Bewegungsdämpfer nach dem vorhergehenden Anspruch, wobei sich der Aufnehmerstab im wesentlichen über den gesamten Hubweg des Dämpferkolbens (3) und/oder der damit verbundenen Kolbenstange (7) erstreckt.

8. Bewegungsdämpfer nach einem der beiden vorhergehenden Ansprüche, wobei der Weggeber (17) eine auf der Kolbenstange (7) sitzende Geberhülse aufweist, die den Aufnehmerstab (15) umschließt.

9. Bewegungsdämpfer nach einem der vorhergehenden Ansprüche, wobei der Sensor (11) einen im Inneren des Dämpfergehäuses (2) aufgenommenen, vorzugsweise am stirnseitigen Boden des Dämpfergehäuses (3) sitzenden Sensorkopf (12) aufweist, in dem eine Auswerteeinrichtung angeordnet ist und/oder an dem eine Signalleitung anschließbar ist.
